# EUROPÄISCHE PATENTSCHRIFT

(11) **EP 2 893 097 B1**
(45) Veröffentlichungstag und Bekanntmachung des Hinweises auf die Patenterteilung: **01.02.2017**
(21) Anmeldenummer: 13817965.0
(22) Anmeldetag: 10.09.2013
(51) Int. Cl.: E04B 1/80, E04C 2/296, E04B 1/76

(54) **BAUELEMENT ZUR FASSADENDÄMMUNG UND VERFAHREN ZU SEINER HERSTELLUNG**
COMPONENT FOR FAÇADE INSULATION AND METHOD FOR THE PRODUCTION THEREOF
ÉLÉMENT DE CONSTRUCTION POUR L'ISOLATION DE FAÇADES ET PROCÉDÉ DE FABRICATION DUDIT ÉLÉMENT DE CONSTRUCTION

(30) Priorität: 05.09.2012 DE 102012017513
(43) Veröffentlichungstag der Anmeldung: 15.07.2015
(73) Patentinhaber: FKN Fassaden GmbH & Co. KG, 74632 Neuenstein (DE)
(72) Erfinder: EBERT, Franz, 74597 Stimpfach (DE); MACK, Hans-Ulrich, 74081 Heibronn-Sontheim (DE)
(74) Vertreter: Kindermann, Peter
(86) Internationale Anmeldenummer: PCT/IB2013/002556
(87) Internationale Veröffentlichungsnummer: WO 2014/037809

(56) Entgegenhaltungen:
- WO-A2-2004/001149
- DE-A1- 10 031 149
- DE-A1- 10 234 409
- DE-A1- 19 923 057

## Beschreibung

Die neue Energieeinsparverordnung für Gebäude EnVO 2012/2013 beschäftigt große Teile der Bevölkerung, da von ihren Auswirkungen nicht nur Bauherren und Fachleute sondern mittelbar auch Vermieter und Mieter betroffen sein können.

Bundesregierung und Bauherren sind Anhänger der Fassadendämmung. Doch einige der häufig verarbeiteten Materialien sind offenbar brandgefährlich und gesundheitsschädlich. So hat ein diesbezüglicher Artikel in einem bekannten Nachrichten - Magazin jüngst für Aufsehen gesorgt. Hier wurde drastisch auf die lange vertuschte Gefährlichkeit von Dämmsystemen auf der Basis von Styropor und Phenolharz hingewiesen (Der Spiegel, 26,2012, Glutheiße Seen).

Die mit den zunehmenden Anforderungen an die Gebäude - Wärmedämmung benötigten Dämmstoffdicken steigern zudem die Nachfrage nach effizienteren Materialien und Systemen zur Dämmung. Eine mögliche Abhilfe bietet hierbei die Isolation mit mikroporösen Dämmstoffen. Mikroporöser Dämmstoff wird u.a. aus pyrogener Kieselsäure meist in Verbindung mit einem Stabilisator hergestellt. Die Porengrößen dieser Dämmstoffe sind im Nanobereich und kleiner als die mittlere freie Weglänge der Luftmoleküle, was die ausgezeichneten Dämmeigenschaften bewirkt. Mikroporöse Kieselsäure besitzt eine extrem niedrige Wärmeleitfähigkeit, die sich insbesondere bei hohen Temperaturen nur wenig erhöht. Sie besitzt eine hohe thermische Stabilität, ist nicht brennbar und ist chemisch resistent (Säuren, Alkalien, Abgase).Mikroporöse Kieselsäure ist frei von organischen Bindemitteln. Es ergeben sich bei dieser Art der Dämmung im Wesentlichen folgende Vorteile:
Bei geringerer Dämmstoffdicke besteht eine vielfach geringere Wärmeleitung als bei herkömmlichen Dämmungen.
Die Lebensdauer des Materials liegt bei bis zu 50 Jahren. Weiter zeigt ein Wärmeleitfähigkeit - Vergleich: Mikroporöser Dämmstoff = 0,005 W/mK, Polystyrolschaum = 0,04 W/mK und Glaswolle = 0,035 - 0,045 W/mK.
Es sind auch geringe Dämmstärken ab 1 cm möglich.
Zum Stand der Technik wird auf folgende Dokumente verwiesen.

Aus der EP 1 436 471 B1 sind Paneele mit einem Vakuumelement für Außenwandkonstruktionen bekannt, denen die Aufgabe zugrunde liegt, praxisverwertbare, weniger empfindliche Paneele mit einem möglichst einfachen Aufbau zu schaffen, die für einen besseren Schallschutz und eine bessere Wärmedämmung sorgen.
Diese Aufgabe wird gelöst durch einen Paneelaufbau für Wandkonstruktionen, der in Form eines Bauteils zwischen Rahmenprofilelementen anbringbar ist, umfassend
1) mindestens ein Vakuum - Isolationspaneel und
2) ein Dämmelement, wobei
3) das Vakuum - Isolationspaneel und das Dämmelement zwischen einer äußeren Abdeckung und einer inneren Abdeckung angeordnet sind, dadurch gekennzeichnet, dass
4) der Paneelaufbau weiterhin druckfeste Abstandshalter umfasst die zwischen dem mindestens einen Vakuum - Isolationspaneel und der an dem Dämmelement angrenzenden äußeren Abdeckung und / oder zwischen innerer Abdeckung und äußerer Abdeckung angeordnet und vorzugsweise mit diesen verklebt sind, und
5) sich das Vakuum - Isolationspaneel mit seiner nach der inneren Abdeckung gerichteten Fläche näher zur inneren Abdeckung befindet als das Dämmelement mit seiner nach dieser inneren Abdeckung gerichteten Fläche.

Im Wesentlichen ist hier die Schichtung eines Dämmelements und eines Vakuum - Isolationspaneels unter Verwendung von Abstandshaltern beansprucht.

In der WO 2012/041823 A1 ist ein mikroporöser, mit Organosilanen hydrophobierter Wärmedämmformkörper mit hydrophiler Oberfläche beschrieben.
Die technische Aufgabe dieser Anmeldung war es einen mikroporösen, vorwiegend diffusionsoffenen und hydrophoben Wärmedämmformkörper mit verbesserten mechanischen Eigenschaften bereitzustellen, der es erlaubt, weitere Schichten auf wasserhaltiger Basis dauerhaft aufzubringen.

In dem Dokument DE 100 31 149 A1 ist eine Wärmedämmplatte mit den Merkmalen des Oberbegriffes des Anspruchs 1 beschrieben.

Das Dokument DE 199 23 957 A1 behandelt ein wärmedämmendes Paneel für Fenster, Türen und Fassaden.

In dem Dokument DE 102 34 409 A1 ist eine Vakuumdämmplatte mit Einbuchtungen an den Rändern beschrieben.

Das Dokument WO 2004/00149 AA2 betrifft ein Vakuum-Isolations-Paneel und ein Verfahren zur Wärmedämmung von Objekten sowie Hilfsmittel dafür.

Der vorliegenden Erfindung liegt demgegenüber die Aufgabe zugrunde, ein hochwärmedämmendes Fassadenelement sowie ein zugehöriges Herstellungsverfahren bereit zu stellen, das Brandschutzklasse A genügt, langlebig ist und kostengünstig herstellbar ist.

Diese Aufgabe wird durch die Vorrichtung nach Anspruch 1, bzw. das Verfahren nach Anspruch 7 gelöst.

In den Unteransprüchen sind weitere vorteilhafte Ausgestaltungen der Erfindung gekennzeichnet.

Die erfindungsgemäße Vorrichtung wird im Folgenden näher beschrieben.

Es zeigen im Einzelnen:
Fig. 1 : ein Armierungs - Schema des erfindungsgemäßen Bauelements,
Fig.2: einen Querschnitt einer Fassaden - Gestaltung, mit einer Draufsicht auf die Fassade von der Innenseite,
Fig.3: eine Detail - Ansicht der Armierung des erfindungsgemäßen Bauelements,
Fig.4: Sonderbauformen der inneren Abstandshalter 2
Fig.5: eine Sonderbauform der äußeren Abstandshalter 1
Fig.6: eine weitere Sonderbauform der äußeren Abstandshalter 1
Fig.7: eine weitere Sonderbauform der äußeren Abstandshalter 1
Fig.8:.eine Übersicht über den Randschutz des erfindungsgemäßen Bauelements

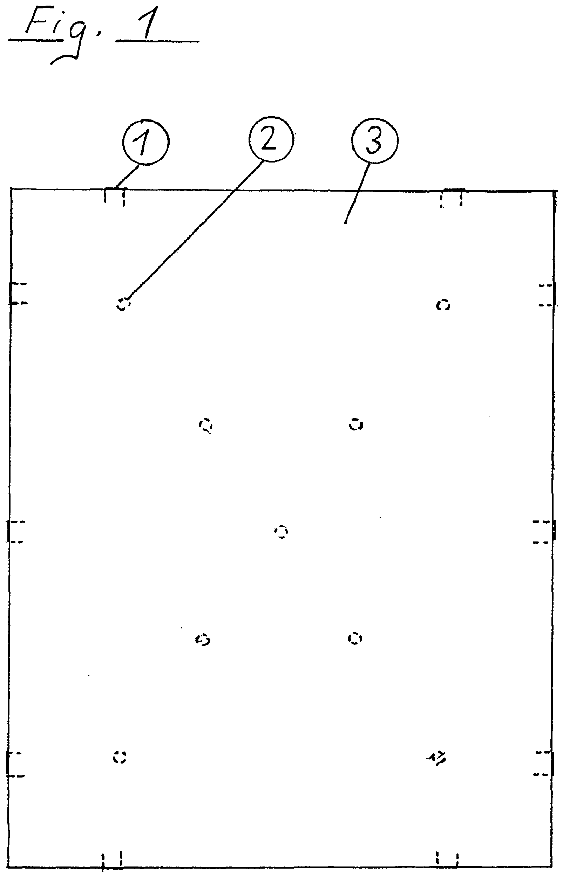

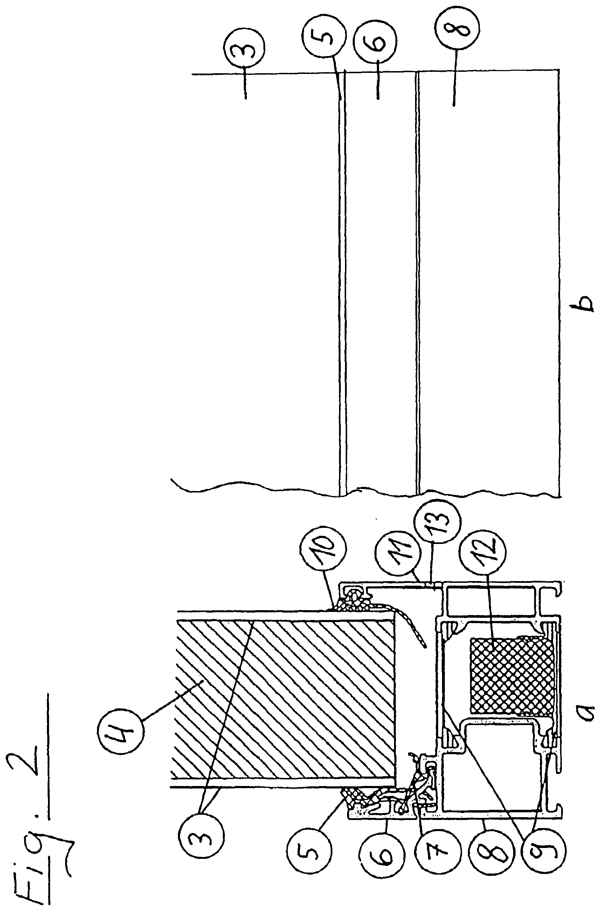

Die Fig. 1 zeigt ein Armierungs - Schema des erfindungsgemäßen Bauelements. Hier ist dieses Bauelement in der Draufsicht auf eine Deckplatte 3 dargestellt. Wie auch der Fig.2 zu entnehmen ist, besteht ein erfindungsgemäßes Bauelement im Wesentlichen aus einer Dämmplatte 4, und einer Deckplatte 3 auf jeder Seite einer solchen Platte 4.

Bei einer Dämmplatte 4 handelt es sich um eine mikroporöse, vollständig hydrophobe Wärmedämmplatte mit den Merkmalen: Wärmeleitzahl < 0,023 W/mK, Brandschutzklasse A, Wasseraufnahme < 1 Gew. %. Bevorzugt wird eine hydrophobe Kieselsäureplatte 4 verwendet.

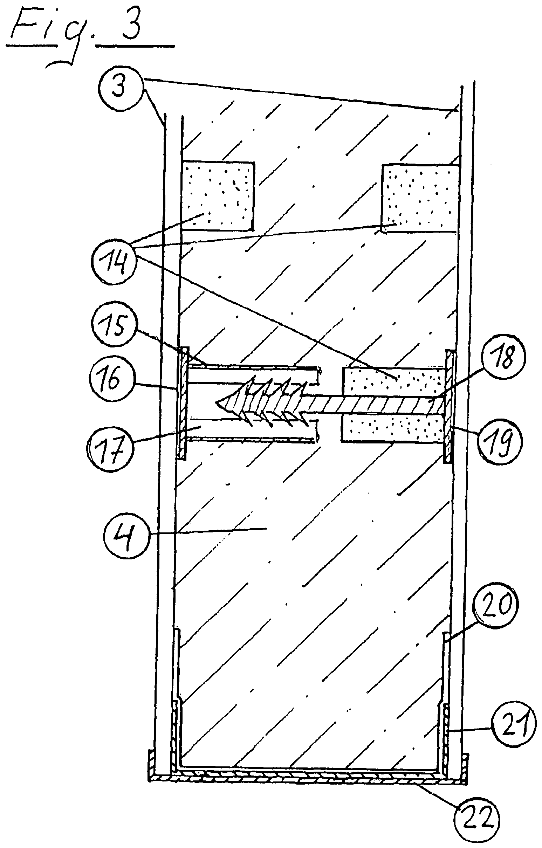

Um den Verbund dieser beiden Deckplatten 3 und der dazwischen liegenden Dämmplatte 4 einerseits insgesamt zu stabilisieren und andererseits, insbesondere bei größeren Flächen, den Zusammenhalt auf der gesamten Fläche zu gewährleisten, sind äußere Abstandshalter 1 und innere Abstandshalter 2 vorgesehen. Die äußeren Abstandshalter 1 weisen im Randbereich grundsätzlich eine U - förmige Gestalt auf und haben einerseits die normale Funktion eines Abstandshalters und andererseits die Funktion einer Klammer, die die beiden Deckplatten 3 mit der innenliegenden Dämmplatte zusammenhält. Nähere Angaben hierzu sind der Fig.3 zu entnehmen. Zur gefälligeren Ansicht sind in der Fig.1 die eingezeichneten Abstandshalter 1 um 90 Grad gedreht dargestellt. Ihre Anzahl richtet sich nach der Flächengröße des Bauelements und nach seiner Dicke.
Die inneren Abstandshalter 2 sind in der Fig.1 lediglich in ihrer ungefähren Lage punktiert gezeichnet. Nähere Angaben hierzu sind ebenfalls der Fig.3 zu entnehmen.

Die Fig.2a zeigt einen Querschnitt einer Fassadenelement - Gestaltung. Die hier dargestellte Fassadenelement ist Teil einer Pfosten - Riegel - Konstruktion. Das erfindungsgemäße Bauelement kann jedoch, mit entsprechenden, dem Fachmann geläufigen, Abwandlungen als Dämmelement in jeder Fassade verwendet werden. Es kann auch als Teil der Dämmung von Dachflächen verwendet werden.
Dieses Bauelement, bestehend aus dem Verbund eines Kerns aus einer Dämmplatte 4 und den beidseitig aufliegenden Deckplatten 3, ist hier zwischen einer inneren Paneeldichtung 5 und einer äußeren Paneeldichtung 10 fixiert.
Als Bestandteile der beispielhaft gezeigten Fassadenelement sind das innere Rahmenelement 8 und das äußere Rahmenelement 11 dargestellt. Die Verbindung dieser beiden Elemente wird mittels der beiden quer verlaufenden Verbindungsstege 9 hergestellt. Die Halteleiste 6 und die Innenleistensicherung 7 vervollständigen diese Fassadenkonstruktion. Innerhalb der Stützkonstruktion ist beispielhaft eine Fläche dargestellt, die mit 12, das heißt, hydrophobe Kieselsäure bezeichnet ist. Dies soll zeigen, dass die gesamte Stützkonstruktion mit diesem Isoliermaterial befüllt sein kann. Die weiter dargestellte Belüftungsöffnung 13 soll auf die Notwendigkeit eventueller Belüftung hinweisen.

Die Fig.2b zeigt eine Draufsicht auf die Fassade nach Fig.2a von der Innenseite her gesehen. Hier sind von oben ausgehend die Deckplatte 3, die innere Paneeldichtung 5, die Halteleiste 6 und das innere Rahmenelement 8 dargestellt.

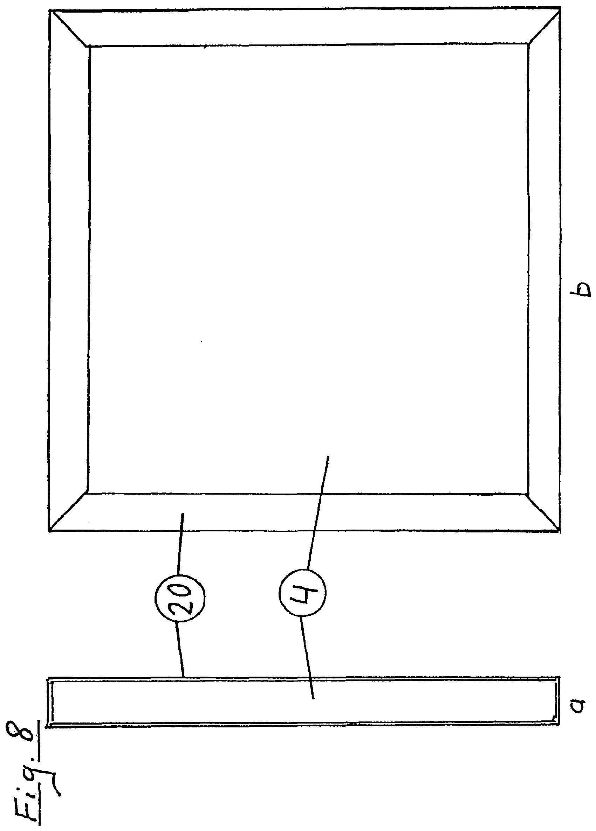

Die Fig.3 zeigt eine Detail - Ansicht der Armierung des erfindungsgemäßen Bauelements. Unter Armierung wird hierbei die Verbindung der beiden gezeigten Deckplatten 3 und der Dämmplatte 4 zu einem erfindungsgemäßen Bauelement verstanden.
Eine Form der Armierung einer Dämmplatte 4 erfolgt über den Randschutz des erfindungsgemäßen Bauelements mittels eines Glasgewebe - Flieses 20, dessen Rundum - Schutz in der Fig.8 deutlich wird. In der Fig.3 ist von diesem Glasgewebe - Flies 20 lediglich ein schmaler Streifen im Bereich der U - Profile 21 und 22 zu erkennen. Das äußere U - Profil 22 wirkt hierbei als äußerer Abstandshalter der die Dämmplatte 4 und die beiden Deckplatten 3 zusammen hält. Das innere U - Profil 21 wirkt dementsprechend in der Weise, dass eine, auf eine oder beide Deckplatten von außen einwirkende, Druckkraft von der direkten Einwirkung auf die Dämmplatte 4 fern gehalten wird.
In ähnlicher Weise wirken die inneren Abstandshalter 2, die in der Fig.1 beschrieben sind und in der Form einer inneren Befestigungshülse 15 und eines inneren Befestigungsnagels 18 in der Fig.3 dargestellt sind. Die Befestigungshülse 15 und der Befestigungsnagel 18 sind hier jeweils auf einer Befestigungsfläche 16, bzw. 19 kraftschlüssig mit der jeweiligen Deckplatte 3 verbunden. Da es sich bei den Deckplatten 3 um Platten aus den unterschiedlichsten Materialien handeln kann, kann es sich bei den hierbei zur Anwendung kommenden Verbindungstechniken um ebenso unterschiedliche Verfahren handeln. Der Fachmann wird demzufolge vom Verschweißen bis zum Verkleben die für das jeweilige Material und die jeweiligen klimatischen Bedingungen günstigste Variante wählen.
Eine Befestigungshülse 15 kann, wie in der Fig.3 gezeigt, eine innere Kunststoffhülse 17 aufweisen in deren Wandung sich die Widerhaken eines zugehörigen Befestigungsnagels 18 beim Zusammenbau eines erfindungsgemäßen Bauelements irreversibel verhaken. Es kann natürlich auch eine Befestigungshülse 15 selbst, zum Beispiel beim Vorliegen einer entsprechenden Deckplatte 3 aus Kunststoff, ebenfalls aus Kunststoff gefertigt sein. Um das beschriebene irreversible Verhaken eines Befestigungsnagels 18 in einer Kunststoffhülse 17, oder einer Befestigungshülse 15, zu fördern, kann die innere Wandung des, mit dem Befestigungsnagel 18 interagierenden, entsprechenden Bauteils aufgeraut sein oder eine Riffelung aufweisen die einer Riffelung an der Oberfläche eines Befestigungsnagels entspricht. Da unter bestimmten klimatischen Bedingungen und Baustoff - Kombinationen hinsichtlich der verwendeten Dämmplatte 4 und den entsprechenden Deckplatten 3 nicht ausgeschlossen werden kann, dass sich an den Grenzflächen dieser Baustoffe Feuchtigkeit bildet, sind im Bereich dieser Grenzflächen Aussparungen vorgesehen die mit Getter - Material 14 gefüllt sind. Dies kann auch bevorzugt im Bereich der äußeren Abstandshalter 1 vorgesehen sein, was aus Gründen der Übersicht in der Fig.3 nicht eingezeichnet wurde. Es wird noch darauf verwiesen, dass sich die Verteilung von Befestigungshülsen 5 und der zugehörigen Befestigungsnägeln 18 auf den beiden Deckplatten 3 wechselseitig verteilen kann. Das bedeutet, dass auf einer Deckplatte 3 nicht nur Befestigungshülsen 15 und auf der anderen nicht nur Befestigungsnägel 18 vorgesehen sind. Auf diese Weise kann eine noch bessere Verbindung des Verbunds der Deckplatten 3 mit der zugehörigen Dämmplatte 4 erreicht werden. Als Material für die jeweiligen Deckplatten 3 können alle Materialien verwendet werden die üblicherweise im Bauwesen verwendet werden. Besonders wird hier darauf verwiesen, dass das erfindungsgemäße Bauelement auf der Außenseite mit der Ausbildung der Deckplatte 3 als Teil einer Solaranlage verwendet werden kann. Dies empfiehlt sich besonders bei der Verwendung als Teil eines Dachausbaus.

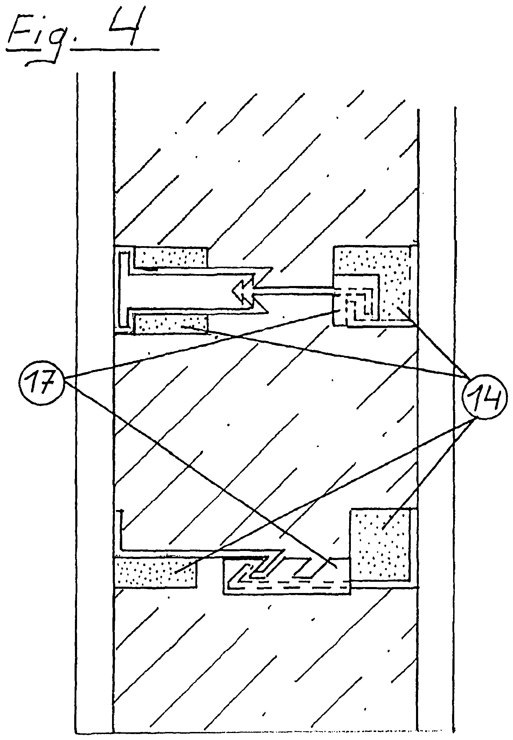

Die Fig. 4 zeigt Sonderbauformen der inneren Abstandshalter 2. Hier ist in der oberen Zeichnung in der Funktion der Kunststoffhülse 17 aus der Fig.3 ein preiswert herzustellendes Formteil aus Stahlblech vorgesehen das von Getter - Material 14 ummantelt wird. Der mit diesem Formteil interagierende Befestigungsnagel kann ebenfalls aus Metall sein, da er in einer Kunststoff - Hülse 17 gehaltert ist und diese Verbindung somit wärmetechnisch entkoppelt ist. Es können natürlich auch eines oder beide interagierenden Formteile aus Kunststoff gefertigt sein, wenn die zu erwartenden Druckkräfte und Zugkräfte nicht zu groß sind.
Entsprechendes gilt für das im unteren Bereich der Fig. 4 dargestellte Paar an Formteilen. Hier findet die Verbindung der Formteile gewissermaßen durch ein flächenmäßiges Verhaken statt. Die wärmetechnische Entkopplung erfolgt durch die Verbindung des gezackten Kunststoffteils 17 mit der Metallzunge des Gegenparts. Im Übrigen kann auch hier die Verwendung lediglich von Kunststoff angebracht sein.

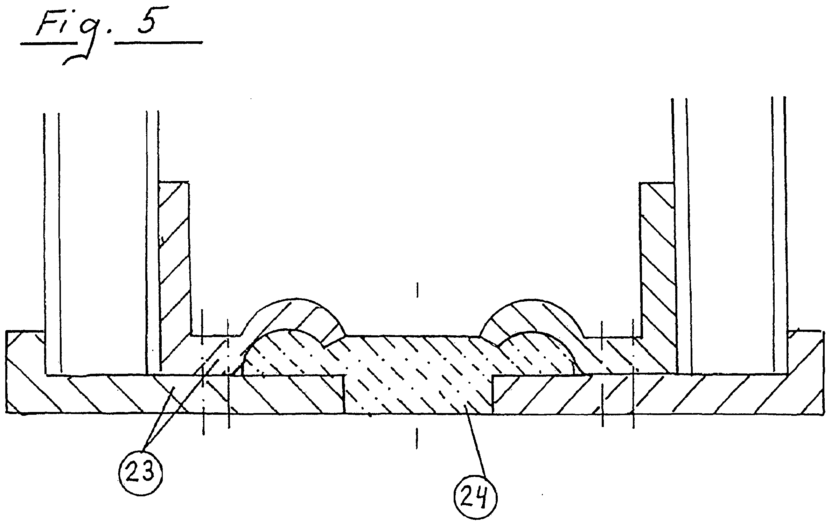

Die Fig.5 zeigt eine Sonderbauform des äußeren Abstandshalters 1. Bei dieser Bauform steht im Vordergrund, dass das erfindungsgemäße Bauelement in großer Stückzahl hergestellt werden kann, wobei auch unterschiedliche Stärken der isolierenden Dämmplatte 4 kostengünstig berücksichtigt werden können. Dies wird durch die beiden zusammen gehörenden Klammerelemente 23 bewirkt, die miteinander auf herkömmliche Weise verbunden, jeweils eine Deckplatte 3 mit ihren, einen U - förmigen Halte - Mechanismus bildenden, abgewinkelten Schenkeln einschließen. Diese Verbindung der beiden Klammerelemente 23 kann mittels Nieten, Schrauben, eine Klebung, oder eine Schweißverbindung hergestellt werden. Dies ist jeweils durch die beiden strich - punktierten Linien gekennzeichnet. Hier können, mit einer gewissen Einschränkung, auch unterschiedliche Dicken der Deckplatten 3 berücksichtigt werden. Die wichtigste Variierbarkeit wird jedoch durch den Haltesteg 24 erreicht. Dieser Haltesteg ist bevorzugt aus Kunststoff um eine Wärmebrücke zwischen den beiden Paaren von Klammerelementen 23 zu verhindern und verbindet die beiden Paare von Klammerelementen durch eine Klemmwirkung in der gezeigten Form. Zur Anpassung an unterschiedliche Dicken der verwendeten Dämmplatte 4 ist lediglich eine andere Breiten - Ausführung des Haltestegs 24 erforderlich das Glasgewebe - Flies 20 wurde in dieser Darstellung weggelassen.

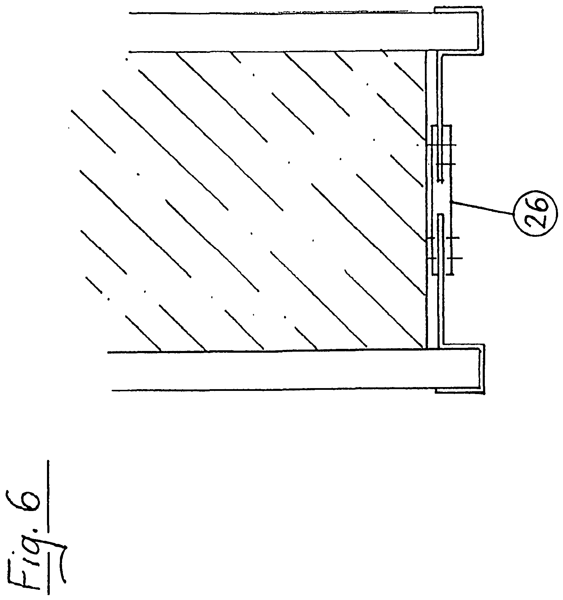

Die Fig.6 zeigt beispielhaft eine weitere Sonderbauform des äußeren Abstandshalters 1. Die beiden Klammerelemente sind hier einstückig ausgeführt. Sie haben jeweils eine Breite, die der Breite der verwendeten Deckplatte 3 entspricht. Die Anpassung an die jeweils verwendete Dicke der Dämmplatte 4 und die erforderliche Wärmedämmung erfolgt mittels eines Kunststoffverbinders 26.

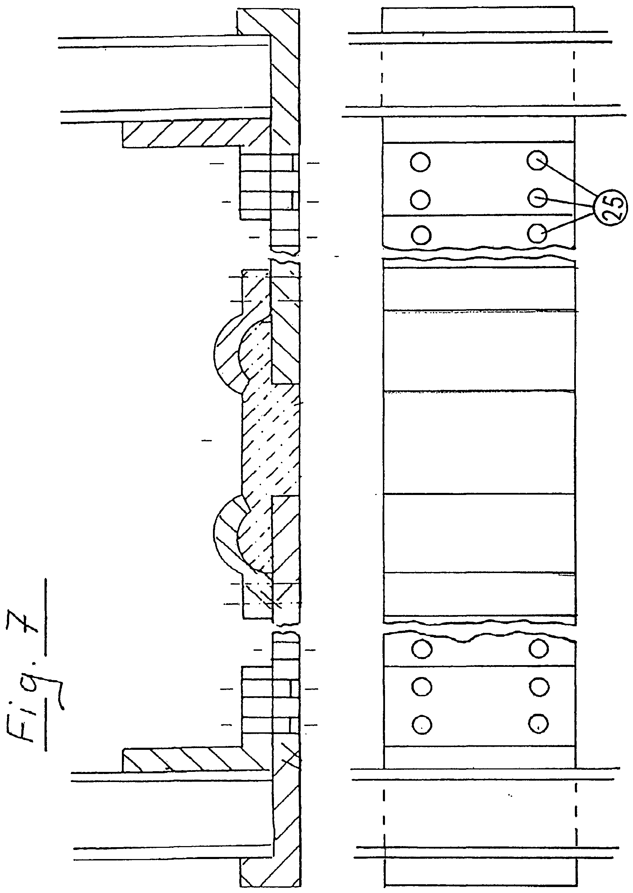

Die Fig.7 zeigt beispielhaft eine weitere Sonderbauform des äußeren Abstandshalters 1. Hier kann die Anpassung der Klammerelemente 23 an die Dicke einer verwendeten Deckplatte 3 mittels einer Rasterverstellung 25 entsprechend der gewählten Rasterweite in den übereinander liegenden und zu verbindenden Klammerelementen 23 erfolgen. Im Übrigen gilt die Beschreibung zu der Fig.5.

Die Fig. 8 zeigt eine Übersicht über den Randschutz des erfindungsgemäßen Bauelements. In den beiden Teilen dieser Fig.8 ist zu sehen, dass der Rundum - Schutz einer Dämmplatte 4 durch ein Glasgewebe - Flies 20 nur im Randbereich erfolgt.

Das erfindungsgemäße Bauelement kann anstelle einer Dämmplatte 4 auch aus einer geschichteten Anordnung mehrerer Dämmplatten verschiedener Materialien bestehen oder mit der Dämmplatte 4 kombiniert werden.

Die komplexe Steuerung bei der Herstellung des beschriebenen Elements erfordert ein spezielles Steuerprogramm.

### Bezugszeichenliste

- 1: äußere Abstandshalter
- 2: innere Abstandshalter
- 3: Deckplatte
- 4: Dämmstoff, Dämmstoffplatte, hydrophobe Kieselsäureplatte
- 5: innere Paneeldichtung
- 6: Halteleiste
- 7: Innenleisten - Dichtung
- 8: inneres Rahmenelelement
- 9: Verbindungssteg
- 10: äußere Paneeldichtung
- 11: äußeres Rahmenelement
- 12: hydrophobe Kieselsäure
- 13: Belüftungsöffnung
- 14: Getter - Material
- 15: Befestigungshülse eines inneren Abstandshalters
- 16: Befestigungsfläche eines inneren Abstandshalters
- 17: Kunststoffhülse
- 18: Befestigungsnagel eines inneren Abstandshalters
- 19: Befestigungsfläche eines Befestigungsnagels
- 20: Glasgewebe - Flies
- 21: inneres U - Profil (äußere Abstandshalter)
- 22: äußeres U - Profil (äußere Abstandshalter)
- 23: Klammerelement
- 24: Haltesteg
- 25: Rasterverstellung
- 26: Kunststoffverbinder

## Patentansprüche

1. Fassadenelement aus mikroporösem Dämmstoff, bestehend aus:
a) einem plattenförmigen Dämmstoff (4) aus hydrophober Kieselsäure, wobei der Dämmstoff (4) an seinem Umfang im Randbereich auf allen Seiten von einer Schutzstruktur aus reißfestem Gewebe umgeben ist,
b) aus Deckplatten (3) die beidseitig des Dämmstoffs (4) in derselben Flächengröße mittels äußerer Abstandshalter (1) fugendicht an dem Dämmstoff (4) befestigt sind, wobei die äußeren Abstandshalter (1) die beiden Deckplatten (3) unter wärmetechnischer Entkopplung zusammenhalten, wobei die äußeren Abstandshalter (1) ein inneres U-Profil (21) und ein äußeres U-Profil (22) aufweisen, **gekennzeichnet, durch**
c) innere Abstandshalter (2), die fugendicht an dem Dämmstoff (4) befestigt sind,
und die die beiden Deckplatten (3) unter wärmetechnischer Entkopplung zusammenhalten, wobei die inneren Abstandshalter (2) einen Befestigungsnagel (18) oder ein entsprechend geformtes Formteil aus Stahlblech aufweisen, wobei die Befestigungsnägel (18) einerseits mittels einer Befestigungsfläche (19) kraftschlüssig mit einer Deckplatte (3) verbunden sind und andererseits die inneren Abstandshalter (2) mittels einer Befestigungshülse (15) mit innenliegender Kunststoffhülse (17), und ihrer Befestigungsfläche (16) mit der anderen Deckplatte (3) kraftschlüssig verbunden sind, oder wobei die geformten Formteile aus Stahlblech einerseits kraftschlüssig mit einer Deckplatte (3) verbunden sind und andererseits die inneren Abstandshalter (2) mittels einer Kunststoffhülse (17) mit der anderen Deckplatte (3) kraftschlüssig verbunden sind, und auch die inneren Abstandshalter (2) miteinander interagieren,
d) wobei die Befestigungsnägel (18) und/oder Formteile aus Stahlblech von Getter-Material (14) ummantelt sind, und wobei Getter-Material (14) entsprechend der Flächengröße des Dämmstoffs (4), zwischen dem Dämmstoff (4) und den Deckplatten (3) in bauphysikalisch sinnvollen Bereichen und entsprechender Anzahl angebracht ist.

2. Fassadenelement nach Anspruch 1,
**dadurch gekennzeichnet,**
**dass** die äußeren Abstandshalter 1 in der Form von jeweils zwei, einen U-förmigen Halte-Mechanismus bildenden, Klammerelementen (23) ausgeführt sind, die mittels eines wärmedämmenden Haltestegs (24) verbunden sind, wobei die Klammerelemente (23) so, in geringem Maß einstellbar, zusammen gefügt sind, dass ihre, den U-förmigen Halte-Mechanismus bildenden, abgewinkelten Schenkel die Dicke einer Deckplatte (3) umfassen und der Haltesteg (24) die Klammerelemente (23) durch Klemmwirkung verbindet, und durch Auswahl an die Dicke der Dämmstoffplatte (4) angepasst werden kann.

3. Fassadenelement nach Anspruch 2,
**dadurch gekennzeichnet,**
**dass** die Klammerelemente (23) einstückig ausgeführt sind, wobei der U-förmige Halte-Mechanismus der Dicke der betreffenden Deckplatte (3) angepasst ist, und ein Kunststoffverbinder (26) die beiden Klammerelemente (23) verbindet, wobei die Länge des Kunststoffverbinders (26) an die Dicke des Dämmstoffs (4) durch Auswahl angepasst werden kann.

4. Fassadenelement nach Anspruch 2,
**dadurch gekennzeichnet,**
**dass** die Breite des U-förmigen Halte-Mechanismus mittels einer Rasterverstellung (25) entsprechend der Distanz der gewählten Rasterweite einstellbar ist.

5. Fassadenelement nach einem der vorhergehenden Ansprüche,
**dadurch gekennzeichnet,**
**dass** die Schutzstruktur aus Glasgewebe-Flies (20) besteht.

6. Fassadenelement nach einem der vorhergehenden Ansprüche,
**dadurch gekennzeichnet,**
**dass** die Dämmstoffplatte (4) mit anderen Dämmstoffplatten kombiniert werden kann.

7. Verfahren zur Herstellung eines Fassadenelements aus mikroporösem Dämmstoff nach Anspruch 1, mit den folgenden Verfahrensschritten:
a) Bereitstellen der benötigten Dämmplatte (4) in der gewünschten Abmessung und der erforderlichen Dicke,
b) Anbringen der benötigten Sackbohrungen in der betreffenden Dämmplatte (4) zur Aufnahme der inneren Abstandshalter (2) und der benötigten Aussparungen für die Aufnahme von Getter-Material (14),
c) Anbringen von Glasgewebe-Flies (20) im Randbereich der Dämmplatte (4),
d) Bereitstellen der erforderlichen Deckplatten (3) in denselben Außenabmessungen wie die der Dämmplatte (4),
e) Anbringen der benötigten Befestigungshülsen (15) und/oder Befestigungsnägel (18) als innere Abstandshalter (2) an der Innenseite der jeweiligen Deckplatte (3) entsprechend den Flächenkoordinaten der Sackbohrungen in der Dämmplatte (4), wobei die inneren Abstandshalter (2) von Getter-Material (14) ummantelt sind,
f) Zusammenstecken der Deckplatten (3) mit der Zwischenlage einer Dämmplatte (4), und
g) Anbringen der äußeren Abstandshalter (1)

8. Verfahren nach Anspruch 7,
**dadurch gekennzeichnet,**
**dass** als Dämmplatte (4) eine mikroporöse, vollständig hydrophobe Wärmedämmplatte mit den Merkmalen: Wärmeleitzahl < 0,023 W/mK, Brandschutzklasse A, Wasseraufnahme < 1 Gew. %, insbesondere eine hydrophobe Kieselsäureplatte (4), verwendet wird.

9. Verfahren nach einem der Ansprüche 7 oder 8,
**dadurch gekennzeichnet,**
**dass** die Abmessungen der inneren Abstandhalter (2) und der äußeren Abstandshalter (1) an die Abmessungen der Dämmplatte (4) und/oder der beiden Deckplatten (3) angepasst werden können.

10. Computerprogramm mit einem Programmcode zur Durchführung der Verfahrensschritte nach einem der Ansprüche 7 bis 9 wenn das Programm in einem Computer ausgeführt wird.

11. Maschinenlesbarer Träger mit dem Programmcode eines Computerprogramms zur Durchführung des Verfahrens nach einem der Ansprüche 7 bis 9, wenn das Programm in einem Computer ausgeführt wird.

## Claims

1. Façade element made of microporous insulating material, comprising:
a) a panel-like insulating material (4) made of hydrophobic silica, wherein the insulating material (4) is circumferentially enclosed on all sides, in the peripheral region, by a protective structure made of tear-resistant fabric,
b) cover panels (3), which are fastened on the insulating material (4) with sealed joints, on either side of the insulating material (4) and with the same surface-area size, by means of outer spacers (1), wherein the outer spacers (1) hold the two cover panels (3) together, thermal decoupling being achieved in the process, wherein the outer spacers (1) have an inner U profile (21) and an outer U profile (22),
**characterized by**
c) inner spacers (2), which are fastened on the insulating material (4) with sealed joints, and which hold the two cover panels (3) together, thermal decoupling being achieved in the process, wherein the inner spacers (2) have a fastening nail (18) or a correspondingly shaped moulding made of sheet steel, wherein, on the one hand, the fastening nails (18) are connected to one cover panel (3) in a force-fitting manner by means of a fastening surface (19) and, on the other hand, the inner spacers (2) are connected to the other cover panel (3) in a force-fitting manner by means of a fastening sleeve (15), with an inner plastics-material sleeve (17), and their fastening surface (16), or wherein, on the one hand, the shaped mouldings made of sheet steel are connected to one cover panel (3) in a force-fitting manner and, on the other hand, the inner spacers (2) are connected to the other cover panel (3) in a force-fitting manner by means of a plastics-material sleeve (17), and also the inner spacers (2) interact with one another,
d) wherein the fastening nails (18) and/or mouldings made of sheet steel are encased by getter material (14), wherein the getter material (14) is provided, in accordance with the surface-area size of the insulating material (4), in structurally expedient regions and appropriate amounts between the insulating material (4) and the cover panels (3).

2. Façade element according to Claim 1,
**characterized**
**in that** the outer spacers (1) are designed in the form of in each case two clamp elements (23), which form a U-shaped retaining mechanism and are connected by means of a heat-insulating retaining crosspiece (24), wherein the clamp elements (23) are joined together, with adjustment capability to some extent, such that their angled limbs, which form the U-shaped retaining mechanism, enclose the thickness of a cover panel (3) and the retaining cross piece (24) connects the clamp elements (23) by clamping action and can be selectively adapted to the thickness of the insulating-material panel (4).

3. Façade element according to Claim 2,
**characterized**
**in that** the clamp elements (23) are designed in one piece, wherein the U-shaped retaining mechanism is adapted to the thickness of the relevant cover panel (3), and a plastics-material connector (26) connects the two clamp elements (23), wherein the length of the plastics-material connector (26) can be selectively adapted to the thickness of the insulating material (4).

4. Façade element according to Claim 2,
**characterized**
**in that** the width of the U-shaped retaining mechanism can be adjusted by way of a unit-spacing adjustment means (25) in a manner corresponding to the distance of the unit spacing selected.

5. Façade element according to one of the preceding claims,
**characterized**
**in that** the protective structure consists of non-woven glass fabric (20).

6. Façade element according to one of the preceding claims
**characterized**
**in that** the insulating-material panel (4) can be combined with other insulating-material panels.

7. Method of producing a façade element made of microporous insulating material according to Claim 1, having the following method steps:
a) supplying the required insulating panel (4) of the desired dimensioning and of the necessary thickness,
b) making the required blind bores in the relevant insulating panel (4) in order to accommodate the inner spacers (2) and making the required apertures in order to accommodate getter material (14),
c) applying non-woven glass fabric (20) in the peripheral region of the insulating panel (4),
d) supplying the necessary cover panels (3) of the same outer dimensions as that of the insulating panel (4),
e) fitting the required fastening sleeves (15) and/or fastening nails (18), in the form of inner spacers (2), on the inside of the respective cover panel (3) in accordance with the co-ordinates of the blind bores in the insulating panel (4), wherein the inner spacers (2) are encased by getter material (14),
f) fitting together the cover panels (3) with the intermediate layer formed by an insulating panel (4), and
g) fitting the outer spacers (1).

8. Method according to Claim 7,
**characterized**
**in that** the insulating panel (4) used is a microporous, fully hydrophobic heat-insulating panel having the following features: a thermal conductivity < 0.023 W/mK, fire protection class A, water absorption < 1 percent by weight, in particular a hydrophobic silica panel (4).

9. Method according to either of Claims 7 and 8,
**characterized**
**in that** the dimensions of the inner spacers (2) and of the outer spacers (1) can be adapted to the dimensions of the insulating panel (4) and/or of the two cover panels (3).

10. Computer program having a program code for implementing the method steps according to one of Claims 7 to 9 when the program is executed in a computer.

11. Machine-readable carrier having the program code of a computer program for implementing the method according to one of Claims 7 to 9 when the program is executed in a computer.

## Revendications

1. Elément de façade en matériau isolant microporeux, se composant de:
a) un matériau isolant en forme de plaque (4) en acide silicique hydrophobe, dans lequel le matériau isolant (4) est entouré à sa périphérie, dans la région du bord sur tous les côtés, par une structure de protection en tissu résistant à la déchirure,
b) plaques de recouvrement (3) qui sont fixées de part et d'autre du matériau isolant (4) avec la même grandeur de surface au moyen d'écarteurs extérieurs (1) avec un joint étanche sur le matériau isolant (4), dans lequel les écarteurs extérieurs (1) solidarisent les deux plaques de recouvrement (3) avec rupture technique du couplage thermique, dans lequel les écarteurs extérieurs (1) présentent un profil intérieur en U (21) et un profil extérieur en U (22),
**caractérisé par**
c) des écarteurs intérieurs (2), qui sont fixés avec un joint étanche au matériau isolant (4), et qui solidarisent les deux plaques de recouvrement (3) avec rupture technique du couplage thermique, dans lequel les écarteurs intérieurs (2) présentent un clou de fixation (18) ou une pièce de forme formée de façon correspondante en tôle d'acier, dans lequel les clous de fixation (18) sont d'une part assemblés à une plaque de recouvrement (3) par force au moyen d'une face de fixation (19) et les écarteurs intérieurs (2) sont d'autre part assemblés par force à l'autre plaque de recouvrement (3) au moyen d'une douille de fixation (15) avec une douille en plastique intérieure (17) et leur face de fixation (16), ou dans lequel les pièces de forme formées en tôle d'acier sont d'une part assemblées par force à une plaque de recouvrement (3) et d'autre part les écarteurs intérieurs (2) sont assemblés par force à l'autre plaque de recouvrement (3) au moyen d'une douille en plastique (17) et aussi les écarteurs intérieurs (2) interagissent les uns avec les autres,
d) dans lequel les clous de fixation (18) et/ou les pièces de forme en tôle d'acier sont enrobé(e)s de matériau piégeur (14), et dans lequel le matériau piégeur (14) est appliqué selon la grandeur de la surface du matériau isolant (4), entre le matériau isolant (4) et les plaques de recouvrement (3), dans des zones judicieuses physiquement pour la construction et en nombre correspondant.

2. Elément de façade selon la revendication 1, **caractérisé en ce que** les écarteurs extérieurs (1) sont exécutés sous la forme de chaque fois deux éléments de pince (23) formant un mécanisme de retenue en forme de U, qui sont reliés au moyen d'une nervure de maintien thermiquement isolante (24), dans lequel les éléments de pince (23) sont joints, de façon réglable dans une faible mesure, de telle manière que leurs branches coudées formant le mécanisme de retenue en forme de U saisissent l'épaisseur d'une plaque de recouvrement (3) et que la nervure de maintien (24) relie les éléments de pince (23) par un effet de serrage, et puisse être adaptée par choix à l'épaisseur de la plaque de matériau isolant (4).

3. Elément de façade selon la revendication 2, **caractérisé en ce que** les éléments de pince (23) sont réalisés d'une seule pièce, dans lequel le mécanisme de retenue en forme de U est adapté à l'épaisseur de la plaque de recouvrement concernée (3), et un connecteur en plastique (26) relie les deux éléments de pince (23), dans lequel la longueur du connecteur en plastique (26) peut être adaptée par choix à l'épaisseur du matériau isolant (4).

4. Elément de façade selon la revendication 2, **caractérisé en ce que** la largeur du mécanisme de retenue en forme de U est réglable au moyen d'un réglage à grille (25) selon la distance de la taille de grille choisie.

5. Elément de façade selon l'une quelconque des revendications précédentes, **caractérisé en ce que** la structure de protection est constituée d'une étoffe de tissu de verre (20).

6. Elément de façade selon l'une quelconque des revendications précédentes, **caractérisé en ce que** la plaque de matériau isolant (4) peut être combinée avec d'autres plaques de matériau isolant.

7. Procédé de fabrication d'un élément de façade en matériau isolant microporeux selon la revendication 1, comprenant les étapes de procédé suivantes:
a) préparer la plaque isolante nécessaire (4) à la dimension souhaitée et avec l'épaisseur requise,
b) pratiquer les trous borgnes nécessaires dans la plaque isolante concernée (4) en vue de loger les écarteurs intérieurs (2) et les évidements nécessaires pour loger le matériau piégeur (14),
c) appliquer une étoffe en tissu de verre (20) dans la région de bord de la plaque isolante (4),
d) préparer les plaques de recouvrement nécessaires (3) avec les mêmes dimensions extérieures que la plaque isolante (4),
e) poser les douilles de fixation (15) et/ou les clous de fixation (18) nécessaires comme écarteurs intérieurs (2) sur le côté intérieur de la plaque de recouvrement respective (3) selon les coordonnées de surface des trous borgnes dans la plaque isolante (4), dans lequel les écarteurs intérieurs (2) sont enrobés de matériau piégeur (14),
f) assembler les plaques de recouvrement (3) avec la couche intermédiaire d'une plaque isolante (4), et
g) poser les écarteurs extérieurs (1).

8. Procédé selon la revendication 7, **caractérisé en ce que** l'on utilise comme plaque isolante (4) une plaque d'isolation thermique microporeuse, entièrement hydrophobe, avec les caractéristiques suivantes: coefficient de conductibilité thermique < 0,023 W/mK, classe de protection contre l'incendie A, absorption d'eau < 1 % en poids, en particulier une plaque en acide silicique hydrophobe (4).

9. Procédé selon une des revendications 7 ou 8, **caractérisé en ce que** les dimensions des écarteurs intérieurs (2) et des écarteurs extérieurs (1) peuvent être adaptées aux dimensions de la plaque isolante (4) et/ou des deux plaques de recouvrement (3).

10. Programme informatique avec un code de programme pour la mise en oeuvre des étapes de procédé selon une des revendications 7 à 9 lorsque le programme est exécuté sur un ordinateur.

11. Support lisible par machine avec le code de programme d'un programme informatique pour la mise en oeuvre du procédé selon une des revendications 7 à 9, lorsque le programme est exécuté sur un ordinateur.
